# Europäisches Patentamt

# European Patent Office

# Office européen des brevets

(19)

(11) Veröffentlichungsnummer: **0 197 178 B1**

(12) **EUROPÄISCHE PATENTSCHRIFT**

(45) Veröffentlichungstag der Patentschrift:
**08.06.88**

(21) Anmeldenummer: **85104328.1**

(22) Anmeldetag: **10.04.85**

(51) Int. Cl.⁴: **F 04 B 21/04**, F 16 J 1/12, F 16 B 37/12

(54) Verfahren zum Herstellen von Kolben aus spröden Hartstoffen.

(43) Veröffentlichungstag der Anmeldung:
**15.10.86 Patentblatt 86/42**

(45) Bekanntmachung des Hinweises auf die Patenterteilung:
**08.06.88 Patentblatt 88/23**

(84) Benannte Vertragsstaaten:
**AT BE CH DE FR GB IT LI LU NL SE**

(56) Entgegenhaltungen:
**DE-A-2 511 467
DE-A-2 939 284
GB-A-2 142 413
US-A-4 475 329**

(73) Patentinhaber: **Feldmühle Aktiengesellschaft, Fritz-Vomfelde- Platz 4, D-4000 Düsseldorf 11 (DE)**

(72) Erfinder: **Przebela, Robert, Sudetenweg 3-5, D-7310 Plochingen (DE)**

LIBER, STOCKHOLM 1988

**Beschreibung**

Die Erfindung betrifft ein verfahren zum Herstellen von Kolben aus spröden Hartstoffen, insbesondere aus gesinterter Oxidkeramik, mit darin eingebrachten metallischen Anschlußelementen, durch Fertigen eines ein Sackloch aufweisenden Grünlings, Sintern des Grünlings, Bearbeiten des fertig gesinterten Kolbens an seinen Außenflächen auf Fertigmaß, Einbringen von Kleber in das Sackloch und Einsetzen des metallischen Anschlußelementes.

Kolben der vorgenannten Art werden als Pumpenkolben seit langer Zeit gefertigt. Als Material wird dabei hauptsächlich gesinterte Oxidkeramik eingesetzt, die sich aufgrund ihrer hohen Verschleißfestigkeit und ihrer hohen Beständigkeit gegen Chemikalien gut eingeführt hat.

Neben diesen bekannten guten Eigenschaften der Oxidkeramik sind jedoch Eigenschaften bekannt, die ihren Einsatz, insbesondere in Verbindung mit Metallen, problematisch machen. Im wesentlichen handelt es sich dabei um den unterschiedlichen Wärmeausdehnungskoeffizienten, d. h., daß sich die Wärmeausdehnungskoeffizienten von Metall und Oxidkeramik erheblich unterscheiden, da der Ausdehnungskoeffizient von Metall wesentlich größer als der von Keramik ist. Daraus ergibt sich zwangsläufig, daß in einen Keramikkörper auch keine kraftschlüssige Metallverbindung eingebracht werden kann, ohne daß bei Erwärmung erhebliche auf der Ausdehnung des Metallkörpers beruhende Sprengkräfte in der Keramik auftreten.

Oxidkeramik weist bekanntlich eine extrem hohe Druckfestigkeit auf, ist jedoch gegenüber Zugbelastungen äußerst empfindlich. Damit ist der Einsatz von mit der Keramik in Verbindung stehenden Metallteilen nur da möglich, wo entweder die Grenzen der Zugfestigkeit nicht überschritten werden, oder die Teile so angeordnet sind, daß die Keramik nur auf Druck beansprucht wird. Man hat daher üblicherweise die Pumpenkolben entweder aus Vollkeramik hergestellt und sie dann von außen durch Metallhalter umfaßt und so mit dem Pumpengestänge verbunden, oder man hat einen Dorn in den als Hohlzylinder ausgeführten Pumpenkolben eingekittet. Die erste Möglichkeit setzt infolge der erforderlichen Paßgenauigkeit ein aufwendiges Schleifen der Keramik auch im Bereich der Befestigungsstellen voraus, da die Keramik nur mit Diamantscheiben bearbeitet werden kann, ist dieses ein besonders aufwendiges Unterfangen. Die zweite Möglichkeit des Einkittens von Dornen in die Keramik berücksichtigt zwar die unterschiedlichsten Wärmeausdehnungskoeffizienten, wenn man einen dauerplastischen Kitt verwendet, genügt aber insbesondere bei hohen Geschwindigkeiten, d. h., also bei schnellaufenden Pumpen mit mehreren 100 Hüben/Min., nicht den Festigkeitsanforderungen, da der Keramikkolben aufgrund der Fliehkräfte gelockert wird und sich mit der Zeit vom Dorn löst.

Mit der DE-PS-29 39 284 der Anmelderin ist deshalb bereits vorgeschlagen worden, den Pumpenkolben mit einem Sackloch, das Grobgewinde aufweist, zu versehen, in dieses Grobgewinde Kitt einzubringen und einen ebenfalls mit Grobgewinde versehenen Rohling einzudrehen. Nach dem Abbinden des Kittes wird der metallische Rohling fertig bearbeitet, so daß eine einwandfreie Passung zwischen dem Keramikkolben und dem Rohling, der nach der Bearbeitung das metallische Anschlußelement bildet, gegeben ist. Da der Keramikkolben bereits vollständig bearbeitet ist, kann die Bearbeitung des Metallschaftes ohne Schwierigkeiten erfolgen und wird immer zu einem fluchtenden Anschluß führen. Ebenso ist die Kraftübertragung gesichert, da der eingebrachte Rohling an der Wandung des Sackloches im Keramikkolben wenigstens an einigen Stellen anliegt.

Nachteilig bei dem bekannten Verfahren ist jedoch, daß die Fertigbearbeitung des Metallrohlings zum Anschlußelement erst dann erfolgen kann, wenn eine feste Verbindung zwischen dem fertig bearbeiteten Keramikteil und dem Rohling gegeben ist, also wenn der Kitt ausgehärtet ist. Es muß dabei der Kolben als zentrierendes Element in eine Drehmaschine eingesetzt und der Rohling auf Maß gebracht werden, wobei der Rohling stets eine gewisse unterschiedliche Lage im Kolben aufweist, so daß eine vollautomatische Zufuhr und Bearbeitung der Aggregate nicht möglich ist. Der Erfindung liegt daher die Aufgabe zugrunde, bei der Herstellung von Kolben die Verwendung von fertig bearbeiteten Automatenteilen zu ermöglichen und so eine Montage ohne Nachbearbeitung zu erreichen.

Diese Aufgabe wird gelöst durch ein Verfahren zum Herstellen von Kolben aus spröden Hartstoffen, insbesondere aus gesinterter Oxidkeramik mit darin eingebrachten metallischen Anschlußelementen durch Fertigung eines ein Sackloch aufweisenden Grünlings, Sintern des Grünlings, Bearbeiten des fertig gesinterten Kolbens an seinen Außenflächen auf Fertigmaß, Einbringen von Kleber in das Sackloch und Einsetzen des metallischen Anschlußelementes mit dem kennzeichnenden Merkmal, daß als Anschlußelement eine mehrfach geschlitzte Spannhülse mit einem durch einen Konus auseinanderspreizbaren Ansatz in das mit einer Ringnut versehene Sackloch eingebracht, durch einen Zentrieraufsatz zentriert und gespannt wird, wobei diese Spannung mindestens bis zur Abbindung des Klebers aufrecht erhalten wird.

Durch die Verwendung einer Spannhülse mit Konus in der Kombination mit einem Kleber ist es möglich, die Spannhülse nach dem Auseinanderspreizen in der durch den Zentrieraufsatz vorgegebenen Lage zu fixieren. Die kraftschlüssige Verbindung zwischen der Spannhülse und dem Keramikkolben erfolgt im Bereich der Ringnut des Kolbens, in die der Ansatz der geschlitzten Spannhülse eingreift. Der nicht von dem Anschlußelement im Sackloch beanspruchte Raum ist im wesentlichen mit Kleber gefüllt, so daß der Zentrieraufsatz, der gemäß einer vorteilhaften Ausgestaltung der Erfindung an der Mantelfläche des Kolbens geführt wird und sich auf der Stirnfläche des Kolbens abstützt, die Spannhülse ausrichtet, so daß deren Mittelachse mit der Mittelachse des Kolbens fluchtet. Die Schenkel der Spannhülse werden dabei bleibend

2

verformt, so daß die Ansätze an ihnen in der Ringnut ruhen und durch den Kleber in dieser Position fixiert werden. Dadurch bildet sich im oberen Bereich der Schenkel, also in dem Bereich, der sich in Richtung der Öffnung des Sackloches befindet, ein Freiraum zwischen den Schenkeln und der verlängerten Konusmutter bzw. einer entsprechenden Spannschraube, so daß bei Temperaturerhöhungen aufgrund dieses Freiraumes und der Tatsache, daß die Spannhülse geschlitzt, also in mehrere Schenkel aufgeteilt ist, sich der einzelne Schenkel in diesem Freiraum hinbiegt es kommt also nicht zu schädlichen Spannungen im Bereich der Ringnut, die den Kolben sprengen könnten.

Der Zentrieraufsatz als solcher kann bereits Teil der Kolbenstange sein. Zweckmäßiger ist es jedoch, ihn als Montagevorrichtung auszuführen, d.h., daß gemäß einer bevorzugten Ausgestaltung der Erfindung der Zentrieraufsatz nach Abbinden des Klebers entfernt wird. Nach der Entfernung des Zentrieraufsatzes verbleibt dann ein Kolben, der je nach Ausführungsform der Spannhülse entweder mit einem Innengewinde versehen ist, oder der einen nach außen vorragenden Gewindezapfen aufweist. In beiden Fällen jedoch fluchten die Mittellinien von Zapfen bzw. Gewindemutter mit der Mittellinie des Kolbens. Außerdem ist eine kraftschlüssige Verbindung hergestellt und die Spannhülse in ihrer Lage durch den Kleber fest verankert.

Eine vorteilhafte Ausgestaltung der Erfindung sieht vor, daß der Zentrieraufsatz mit einem Drehmomentschlüssel angezogen und das erforderliche Drehmoment unter Berücksichtigung der Gewindesteigung und der Steigung des Konus errechnet wird. Der kleinste Durchmesser des Konus entspricht dabei im allgemeinen dem Nenndurchmesser des Gewindes. Die nachstehende Tabelle gibt darüber Auskunft, mit welchen Drehmomenten übliche Gewinde angezogen werden können und welche Kolbendurchmesser diesen Gewinden zuzuordnen sind. Die Außendurchmesser der jeweiligen Spannelemente sind dabei so gewählt, daß die Mindestwandstärken des Kolbens nicht unterschritten werden, sich also weder bei der Montage noch im Einsatz Überlastungsrisse bilden können.

**Tabelle**

| Kolbendurch-messer (mm) | 120 | 100 | 90 | 80 | 70 | 60 | 50 | 40 | 30 | 25 |
|---|---|---|---|---|---|---|---|---|---|---|
| Mindestwand-stärke des Kolbens (mm) | 35 | 28,5 | 26,5 | 24 | 21,5 | 18 | 15 | 12 | 8,5 | 7,0 |
| Gewinde | M24 | M20 | M18 | M16 | M14 | M12 | M10 | M8 | M6 | M5 |
| Drehmoment (Kpm) | 5,0 | 4,0 | 3,5 | 3,0 | 2,5 | 2,0 | 1,5 | 1,0 | 0,5 | 0,25 |

Als Kleber wird vorzugsweise ein lösungsmittelfreier Einkomponentenkleber auf Epoxidharz-Basis eingesetzt, dessen Ausdehnungskoeffizient nahe dem der Keramik liegt. Kleber dieser Art weisen eine gute Dauertemperaturfestigkeit auf, die im Bereich von ca. 150 bis 170°C liegt und einen kurzfristigen Einsatz von 200°C gestattet. Desweiteren ist wesentlich, daß die Kleber nur eine geringe Elastizität aufweisen, d. h., daß keine Bewegung zwischen dem Keramikkolben und dem metallischen Anschlußstück erfolgt, wodurch eine Lockerung des Keramikkolbens vermieden wird.

Als Oxidkeramik im Sinne der vorliegenden Anmeldung sind Keramiken zu verstehen, die sowohl aus einem als auch aus mehreren Stoffen zusammengesetzt sein können. Bevorzugt werden jedoch die sogenannten Einstoffoxidkeramiken mit geringem Gehalt an Flußmitteln, Stabilisatoren und Korngrößenregulatoren. Im einzelnen kann es sich hierbei um Oxidkeramiken aus Siliziumoxid, Magnesiumoxid, Berylliumoxid, Titanoxid, Zirkonoxid, Aluminiumoxid sowie deren Mischungen handeln, wobei insbesondere Zirkonoxid und Aluminiumoxid bei Sinterkeramiken bevorzugt werden. Besonders bewährt hat sich eine Oxidkeramik aus Aluminiumoxid, die einen Aluminiumoxidgehalt von gleich oder größer 80 % aufweist. Die restlichen Bestandteile dieser Keramik sind im wesentlichen Magnesiumoxid, Siliziumoxid, ggf. Kalziumoxid und Zirkonoxid sowie Verunreinigungen. Zur Erhöhung der Verschleißfestigkeit und der chemischen Beständigkeit kann der Aluminiumoxidgehalt auf über 99 % gesteigert werden. In diesen Fällen besteht die restliche Komponente fast ausschließlich aus Magnesiumoxid, das als Kornwachstumshemmer eingesetzt wird, sowie aus Verunreinigungsspuren.

Ein nach dem erfindunggemäßen Verfahren hergestellter Kolben ist dadurch gekennzeichnet, daß das Sackloch des Kolbens als Anschlußelement eine mehrfach geschlitzte Spannhülse mit einem durch einen Konus auseinandergespreizten in eine Ringnut im Sackloch eingreifenden Ansatz enthält, die durch Kleber in ihrer Lage fixiert ist. Eine bevorzugte Ausgestaltung dieses Kolbens weist das Merkmal auf, daß der Konus eine Konusmutter ist. Diese Konusmutter, die zweckmäßig als verlängerte Konusmutter ausgeführt ist, dient als Verbindungselement zur Kolbenstange, d. h. der Kolben kann direkt auf die Kolbenstange, die dann als Gewindebolzen ausgeführt ist, aufgeschraubt werden.

Eine alternative Lösung sieht vor, daß der Konus als Kopf einer Spannschraube ausgeführt ist. Die Spannschraube ist dabei, nachdem sie zunächst zum Auseinanderspreizen der Spannhülse diente, das Element, das im Anschluß daran zur Verbindung des Kolbens mit der Kolbenstange, also zum Einschrauben in die Kolbenstange, eingesetzt wird.

Die Erfindung wird nachstehend anhand der Zeichnungen beschrieben.

Fig. 1 zeigt im Schnitt einen Kolben mit eingesetzter Spannhülse und aufgesetztem Zentrieraufsatz,

Fig. 2 den Kolben mit Zentrieraufsatz und Spannhülse im noch nicht eingesetzten Zustand,

Fig. 3 einen Kolben mit eingesetzter Spannhülse und daran angreifender Kolbenstange,

Fig. 4 den gleichen Kolben nach dem Wenden, der Klebstoffverteilung, nach der Aushärtung des Klebers, angeschraubt an die Kolbenstange.

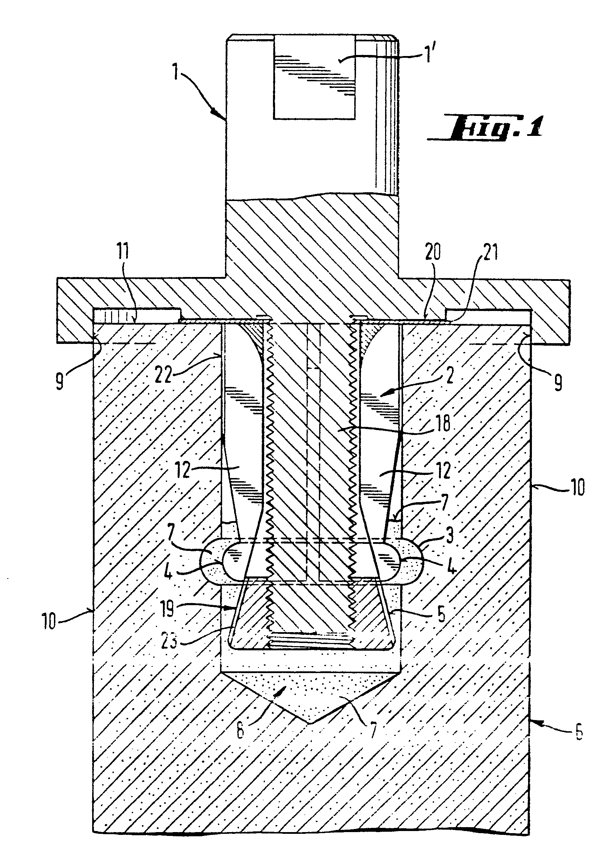

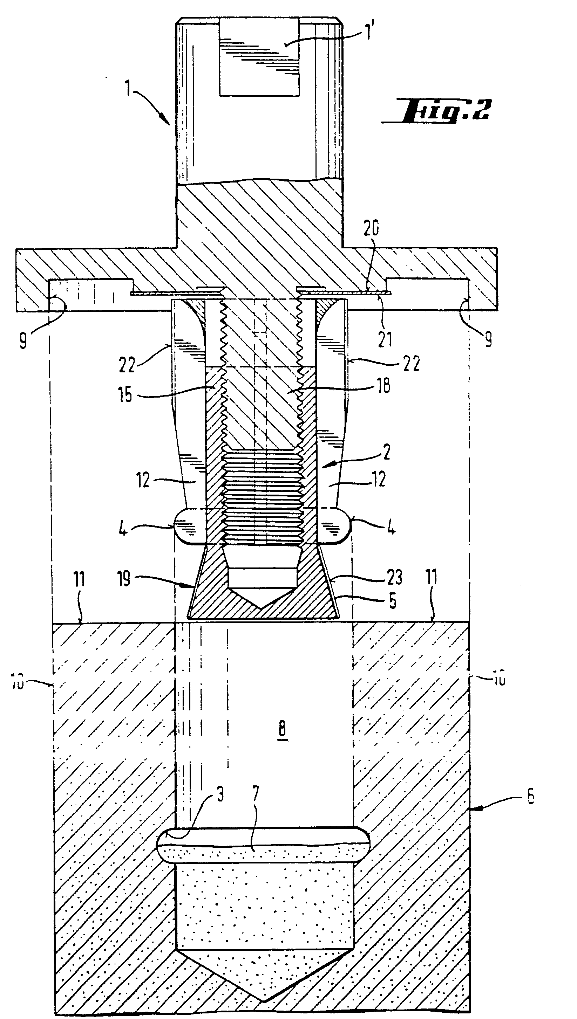

Auf den Zentrieraufsatz 1, der, wie Figuren 1 und 2 zu entnehmen ist, mit einem Gewindezapfen 18 versehen ist, ist die Spannhülse 2 aufgesteckt, die von dem Konus 5 gehalten wird. Der Konus 5 weist ein Innengewinde auf, seine Kegelfläche 19 ist mit Rändelung 23 aufgerauht, um beim Eindrehen des Gewindezapfens 18 die erforderliche Reibung zwischen der Spannhülse 2 und der Kegelfläche 19 zu erzeugen. Eine ähnliche Längsrändelung 22 ist auch oben an der Spannhülse 2 vorgesehen.

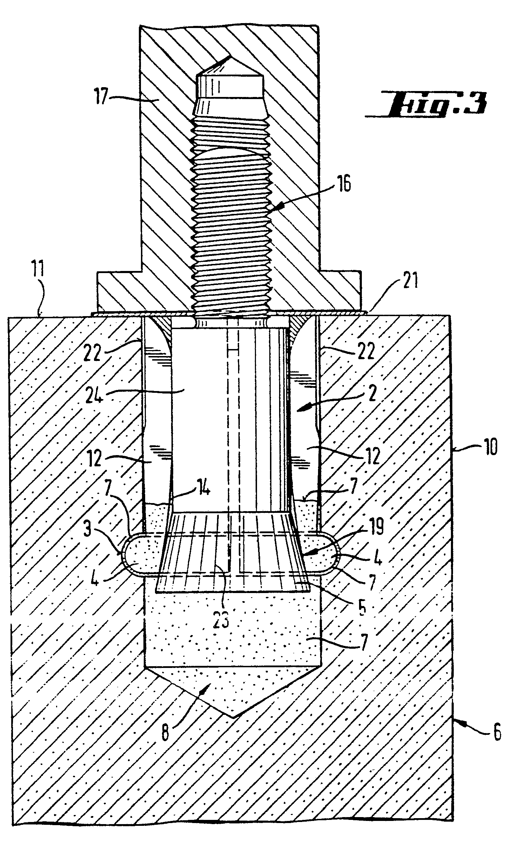

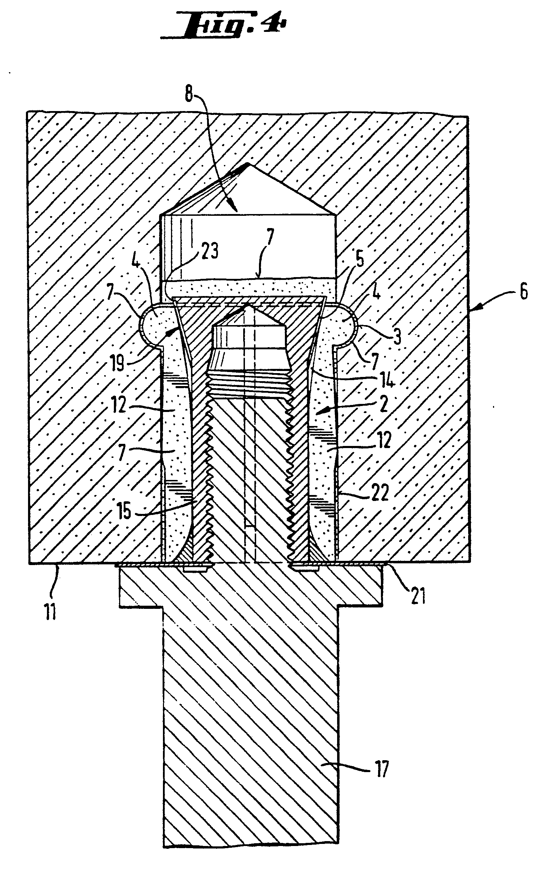

Das Sackloch 8 wird bis ungefähr Mitte der Ringnut 3 mit Kleber 7 gefüllt, bevor der Zentrieraufsatz 1 mit der Spannhülse 2 eingebracht wird. Die Schenkel 12 der Spannhülse 2 verjüngen sich in Richtung des Konus 5 und tragen an ihrem äußeren Ende einen Ansatz 4. Durch Drehen des Zentrieraufsatzes 1 mittels der Schlüsselfläche 1' wird der Ansatz 4 in die Ringnut 3 des Kolbens 6 eingedrückt. Dabei liegt der Zentrieraufsatz 1 mit seinem Bund 20 über eine Dichtung 21 auf der Kolbenstirnfläche 11 auf und wird durch den Bund 9 auf der Kolbenmantelfläche 10 geführt. Die Spannhülse 2 wird dadurch zentriert, gleichzeitig ergibt sich eine schlüssige Verbindung über die Ansätze 4 mit dem Kolben 6. Wie die Figuren 2 und 4 zeigen, kann der Konus 5 die Form einer Konusmutter mit verlängertem Innengewindeteil aufweisen. Alternativ dazu ist es jedoch möglich, wie die Figur 3 zeigt, statt der Konusmutter 15 eine Spannschraube 16 mit Schaft 24 einzusetzen, deren Kopf als Konus 5 ausgebildet ist.

Figur 4 zeigt den Kolben 6 in um 180° gedrehter Position. Der Kleber 7 fließt dabei vom Grund des Sackloches 8 heraus und füllt sowohl die Ringnut 3 als auch den Bereich der Längsrändelung 22.

Nach Abbinden des Klebers 7, der die Schenkel 12 der Spannhülse 2 und die Spannschraube 6, bzw. die Konusmutter 15 in ihrer Lage fixiert, wird die Kolbenstange 17 an den Kolben 6 angeschraubt. Zwischen den Schenkeln 12 und der Spannschraube 16, 24 bzw. der Konusmutter 15 befindet sich jetzt ein Freiraum 14, der durch Erwärmung auftretende Verformung des Schenkels 12 aufnehmen kann. Das Auslaufen des Klebers 7 in der Abbindeposition nach Figur 4 verhindert die Dichtung 21.

**Patentansprüche**

1. Verfahren zum Herstellen von Kolben aus spröden Hartstoffen, insbesondere aus gesinterter Oxidkeramik mit darin eingebrachten metallischen Anschlußelementen, durch Fertigen eines ein Sackloch aufweisenden Grünlings, Sintern des Grünlings, Bearbeiten des fertig gesinterten Kolbens an seinen Außenflächen auf Fertigmaß, Einbringen von Kleber in das Sackloch und Einsetzen des metallischen Anschlußelementes, dadurch gekennzeichnet, daß als Anschlußelement eine mehrfach geschlitzte Spannhülse (2) mit einem durch einen Konus (5) auseinanderspreizbaren Ansatz (4) in das mit einer Ringnut (3) versehene Sackloch (8) eingebracht, durch einen Zentrieraufsatz (1) zentriert und gespannt wird, wobei diese Spannung mindestens bis zur Abbindung des Klebers (7) aufrecht erhalten wird.

2. Verfahren nach Anspruch 1, dadurch gekennzeichnet, daß der Zentrieraufsatz (1) nach Abbinden des Klebers (7) entfernt wird.

3. Verfahren nach einem der Ansprüche 1 und 2, dadurch gekennzeichnet, daß der Zentrieraufsatz (1) an der Kolbenmantelfläche (10) geführt wird und sich auf der benachbarten Kolbenstirnfläche (11) abstützt.

4. Verfahren nach einem der Ansprüche 1 bis 3, dadurch gekennzeichnet, daß der mit Gewinde versehene Zentrieraufsatz (1) mit einem Drehmomentschlüssel angezogen und das erforderliche Drehmoment unter Berücksichtigung der Gewindesteigung und der Steigung des Konus (5) festgelegt wird.

5. Verfahren nach einem der Ansprüche 1 bis 4, dadurch gekennzeichnet, daß als Oxidkeramik Aluminiumoxidsinterkeramik mit einem Aluminiumoxidgehalt von gleich oder größer 80 % eingesetzt wird.

6. Verfahren nach einem der Ansprüche 1 bis 5, dadurch gekennzeichnet, daß als Kleber (7) ein Kaltkleber eingesetzt wird.

7. Verfahren nach einem der Ansprüche 1 bis 6, dadurch gekennzeichnet, daß als Kleber (7) ein lösungsmittelfreier Einkomponentenkleber auf Epoxidharzbasis eingesetzt wird.

8. Kolben aus sprödem Hartstoff, insbesondere aus gesinterter Oxidkeramik mit einem in einem darin befindlichem Sackloch durch Kleber befestigtem metallischen Anschlußelement, dadurch gekennzeichnet, daß das Sackloch (8) des Kolbens (6) als Anschlußelement eine mehrfach geschlitzte Spannhülse (2) mit einem durch einen Konus (5) auseinandergespreizten in eine Ringnut (3) im Sackloch (8) angreifenden Ansatz (4) enthält, die durch Kleber (7) in ihrer Lage fixiert ist.

9. Kolben nach Anspruch 8, dadurch gekennzeichnet, daß der Konus (5) als Konusmutter (15) ausgestaltet ist.

10. Kolben nach Anspruch 8, dadurch gekennzeichnet, daß der Konus (5) als Kopf einer Spannschraube (16, 24) ausgeführt ist.

## Claims

1. Process for the manufacture of pistons from brittle mechanically resistant materials, especially from sintered oxide ceramics, with metallic connecting elements introduced into them, by manufacturing a green compact having a blind hole, sintering the green compact, working the outer surfaces of the ready sintered piston to their final dimensions, introducing bonding agent into the blind hole and inserting the metallic connecting element, characterised in that, as the connecting element, a clamping sleeve (2) having a plurality of slots and having a projection (4) which can be spread apart by a cone (5) is introduced into the blind hole (8) provided with an annular groove (3), is centered by means of a centering projection (1) and stressed, this stress being maintained at least until the bonding agent (7) has set.

2. Process according to claim 1, characterised in that the centering projection (1) is removed once the bonding agent (7) has set.

3. Process according to one of claims 1 and 2, characterised in that the centering projection (1) is guided on the outer surface (10) of the piston and is supported on the adjacent end face (11) of the piston.

4. Process according to any one of claims 1 to 3, characterised in that the centering projection (1) provided with a thread is tightened using a torque spanner and the requisite torque is set taking into consideration the thread pitch and the gradient of the cone (5).

5. Process according to any one of claims 1 to 4, characterised in that aluminium oxide sintered ceramics having an aluminium oxide content equal to or greater than 80 % is used as the oxide ceramics.

6. Process according to any one of claims 1 to 5, characterised in that a cold bonding agent is used as the bonding agent (7).

7. Process according to any one of claims 1 to 6, characterised in that a solvent-free single-component bonding agent based on epoxy resin is used as the bonding agent (7).

8. Piston made of brittle mechanically resistant material, especially of sintered oxide ceramics, having a metallic connecting element secured by a bonding agent in a blind hole located in the piston, characterised in that the blind hole (8) in the piston (6) contains as the connecting element a clamping sleeve (2) having a plurality of slots and having a projection (4) spread apart by a cone (5) and engaging an annular groove (3) in the blind hole (8), which sleeve is fixed in position by a bonding agent (7).

9. Piston according to claim 8, characterised in that the cone (5) is in the form of a cone nut (15).

10. Piston according to claim 8, characterised in that the cone (5) is designed as the head of a clamping screw (16, 24).

## Revendications

1. Procédé pour fabriquer des pistons en matières dures cassantes, notamment en céramique d'oxydes frittée dans laquelle sont disposés des éléments de raccordement métalliques, en préparant une pièce comprimée présentant un trou borgne, en frittant cette pièce, en usinant aux cotes définitives les surfaces extérieures du piston fritté, en introduisant de la colle dans le trou borgne et en insérant l'élément de raccordement métallique, caractérisé par le fait que, dans le trou borgne (8) muni d'une gorge annulaire (3), on introduit, en tant qu'élément de raccordement, une douille de serrage (2) qui est pourvue de plusieurs fentes et d'un relief (4) expansible au moyen d'un cône et qui est centrée et mise en condition d'expansion par un organe de centrage (1), ladite condition d'expansion étant maintenue au moins jusqu'à la prise de la colle (7).

2. Procédé selon revendication 1, caractérisé par le fait que l'on enlève l'organe de centrage (1) après la prise de la colle (7).

3. Procédé selon l'une des revendications 1 et 2, caractérisé par le fait que l'organe de centrage (1) est guidé sur la surface périphérique (10) du piston et prend appui sur la surface frontale voisine (11) que comporte ce piston.

4. Procédé selon l'une des revendications 1 à 3, caractérisé par le fait que l'organe de serrage (1) muni d'un filetage est serré avec une clé dynamométrique, le couple nécessaire étant établi en tenant compte du pas du filetage et de la pente du cône (5).

5. Piston selon l'une des revendications 1 à 4, caractérisé par le fait que la céramique d'ondes utilisée est une céramique à base d'oxyde d'aluminium frittée dont la teneur en oxyde d'aluminium est égale ou supérieure à 80 %.

6. Procédé selon l'une des revendications 1 à 5, caractérisé par le fait que la colle utilisée (7) est une colle a froid.

7. Procédé selon l'une des revendications 1 à 6, caractérisé par le fait que la colle utilisée (7) est une colle à un seul composant, à base de résine époxyde, sans solvant.

8. Piston en matière dure cassante, notamment en céramique d'oxydes frittée, comportant un élément de raccordement métallique fixé par de la colle dans un trou borgne aménagé dans ce piston, caractérisé par le fait que le trou borgne (8) du piston (6) contient, en tant qu'élément de raccordement, une douille expansible (2), laquelle possède plusieurs fentes, est munie d'un relief (4) venant en prise dans une gorge annulaire (3) dans le trou borgne (8) en étant mis en condition d'expansion par un cône (5), et est fixée en position par de la colle (7).

9. Piston selon revendication 8, caractérisé par le fait que le cône (5) est réalisé en tant qu'écrou conique (15).

10. Piston selon revendication 8, caractérisé par le fait que le cône (5) est réalisé en tant que tête d'une vis de serrage (16, 24).

Fig.1

**Fig.2**

Fig.3

# Fig. 4